(19) Europäisches Patentamt
European Patent Office
Office européen des brevets

(11) **EP 2 256 894 A2**

(12) **EUROPEAN PATENT APPLICATION**

(43) Date of publication:
**01.12.2010 Bulletin 2010/48**

(51) Int Cl.:
***H02J 3/38*** (2006.01)

(21) Application number: **10163467.3**

(22) Date of filing: **20.05.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **28.05.2009 US 473397**

(71) Applicant: **General Electric Company Schenectady, NY 12345 (US)**

(72) Inventors:
• **Mendez Hernandez, Yaru Najem 80799 München (DE)**

• **De Rooij, Michael Andrew Sparks, NV 89436 (US)**
• **Mayer, Oliver 81373 München (DE)**
• **Roesner, Robert 85774 Unterföhring (DE)**

(74) Representative: **Bedford, Grant Richard Global Patent Operation - Europe GE International Inc. 15 John Adam Street London WC2N 6LU (GB)**

(54) **Solar power generation system including weatherable units including photovoltaic modules and isolated power converters**

(57) A power generation system (70) including a plurality of isolated power converters (84) and a plurality of first weatherable units (80) is provided. Each of the isolated power converters (84) includes a primary stage (83), a secondary stage (85) and a transformer (87) providing an electrically contactless connection between the primary (83) and secondary stages (85). The first weatherable unit (80) includes a photovoltaic module (82) coupled to the primary stage (83) of a respective one of the plurality of isolated power converters (84) and a primary side of the transformer (87). The system further includes a plurality of second units (81), each having a second side of the transformer (87) coupled to the secondary stage (85) of a respective one of the plurality of isolated power converters (84). The system also includes a direct current (DC) to alternating current (AC) inverter (78) and a connection unit (74) for coupling the secondary stages (85) of the isolated power converter (84) and the DC to AC inverter (78). The DC to AC inverter (78) is configured to transfer power from the photovoltaic module (82) to a power grid (14).

FIG. 3

EP 2 256 894 A2

## Description

This invention relates generally to electrical energy conversion and, more specifically, to connection of photovoltaic modules to a power grid or a load.

With the rising cost and scarcity of conventional energy sources and concerns about the environment, there is a significant interest in alternative energy sources such as solar power and wind power. Solar power generation uses photovoltaic (PV) modules to generate electricity from the sun. Multiple PV cells are connected electrically to one another in such systems.

When connecting a number of such PV cells, significant wiring or cabling is used. Additional cabling and connections are required when a direct current to direct current (DC to DC) converter is used along with a direct current to alternating current (DC to AC) converter to transmit the generated electricity from the PV modules to a load or to a power grid. Grounding connections are used to ensure that exposed conductive surfaces are at the same electrical potential as the surface of the Earth so as to avoid the risk of electrical shock if a person touches a device in which an insulation fault has occurred. When PV modules are mounted on a roof or racking system in the field for solar farm applications, wiring of PV modules is considered by most customers as unsightly. It would be desirable to have a method and a system that will address the foregoing issues.

In accordance with one exemplary embodiment of the present invention, a power generation system is provided. The system includes a plurality of isolated power converters, each having a primary stage, a secondary stage and a transformer to provide an electrically contactless connection between the primary and secondary stages. A plurality of first weatherable units is then provided in the system, each having a photovoltaic module coupled to the primary stage of a respective one of the plurality of isolated power converters and a primary side of the transformer. The system further includes a plurality of second units, each having a second side of the transformer coupled to the secondary stage of a respective one of the plurality of isolated power converters. The system also includes a direct current (DC) to alternating current (AC) inverter and a connection unit for coupling the secondary stages of the isolated power converter and the DC to AC inverter. The DC to AC inverter is configured to transfer power from the photovoltaic module to a power grid.

In accordance with another exemplary embodiment of the present invention, a power generation system having a plurality of photovoltaic modules is provided. The system further includes an isolated power converter having a primary stage, a secondary stage and a transformer providing an electrically contactless connection between the primary and secondary stages. The system also includes a connection unit for coupling outputs of the plurality of photovoltaic modules and the isolated power converter and a DC to AC inverter configured to transfer power from the photovoltaic modules to a power grid.

In accordance with yet another exemplary embodiment of the present invention, a power generation system is provided. The system includes a plurality of partial series resonant converters, each having a primary stage, a secondary stage and a transformer to provide an electrically contactless connection between the primary and secondary stages. A plurality of first weatherable units is then provided in the system, each having a photovoltaic module coupled to the primary stage of a respective one of the plurality of partial series resonant converters and a primary side of the transformer. The system further includes a plurality of second units, each having a second side of the transformer coupled to the secondary stage of a respective one of the plurality of partial series resonant converters. The system also includes a direct current (DC) to alternating current (AC) inverter and a connection unit for coupling the secondary stages of the partial series resonant converter and the DC to AC inverter. The DC to AC inverter is configured to transfer power from the photovoltaic module to a power grid.

Various features, aspects, and advantages of the present invention will become better understood when the following detailed description is read with reference to the accompanying drawings in which like characters represent like parts throughout the drawings, wherein:

FIG. 1 is a diagrammatical representation of a conventional solar power generation system;

FIG. 2 is a diagrammatical representation of a photovoltaic module;

FIG. 3 is a diagrammatical representation of a solar power generation system in accordance with an embodiment of the present invention;

FIG. 4 is a diagrammatical representation of individual first and second weatherable units of the embodiment of FIG. 3;

FIG. 5 is a diagrammatical representation of a detailed view of a magnetic coupling between first and second units in accordance with an embodiment of the present invention;

FIG. 6 is a diagrammatical representation of a solar power generation system using a pulsing bus in accordance with an embodiment of the present invention;

FIG. 7 is a diagrammatical representation of another example of solar power generation system in accordance with an embodiment of the present invention; and

FIG. 8 is a diagrammatical representation of a roof system in accordance with an embodiment of the present invention.

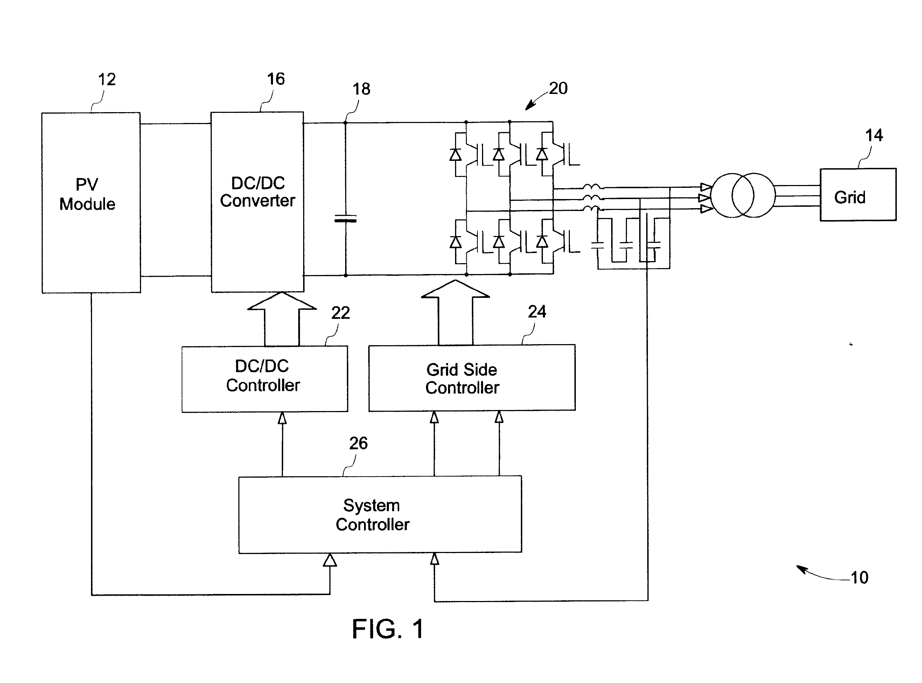

FIG. 1 illustrates a conventional solar power generation system 10. The power generation system includes a PV array 12 including a plurality of connected PV modules or PV strings (not shown). The PV array is connected to a power grid 14 through a DC/DC converter 16, a DC link 18, and a grid side three-phase DC/AC converter 20. The DC/DC converter 16 maintains a constant DC voltage at the DC link 18, and thus the energy flow from the PV module 12 to the power grid 14 is managed. The DC/DC converter 16 is controlled by a DC/DC controller 22, and the grid side converter 20 is controlled by a grid side controller 24. A system controller 26 generates a reference DC voltage command, a reference output voltage magnitude command, and a reference frequency command for the DC/DC converter 22 and grid side converter 20. In other systems, the grid side three-phase converter may be replaced by multiple single-phase converters and/or a single controller may be used for the multiple control functions shown in FIG. 1.

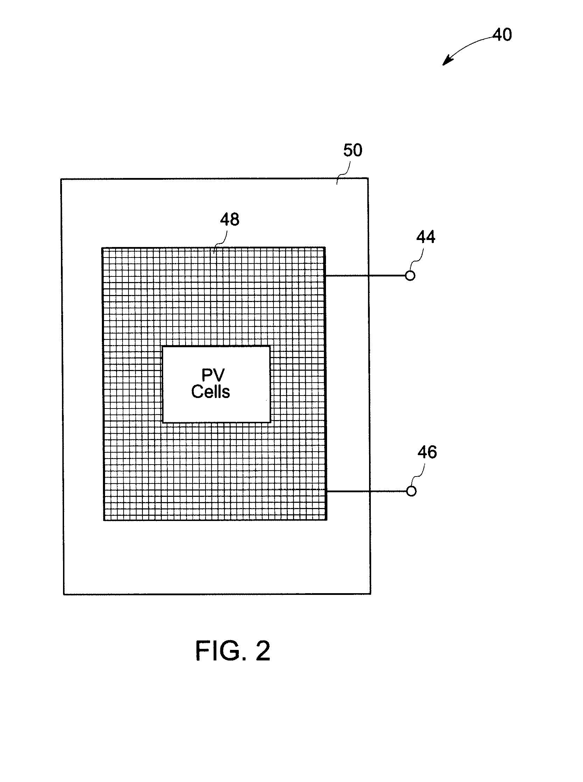

FIG. 2 illustrates a PV module 40 of the type typically used within the PV array 12 of FIG. 1. The PV module 40 includes a plurality of PV cells 42 wired in parallel to provide a higher current and in series to provide a higher voltage at the output terminals 44 and 46. The PV module 12 is encapsulated with a tempered glass or some other transparent material on the front surface 48, and with a protective and waterproof material on the back surface (not shown). The edges are sealed for weatherproofmg, and there is often an aluminum frame 50 holding everything together in a mountable unit. A junction box or wire leads (not shown) are used for providing electrical connections.

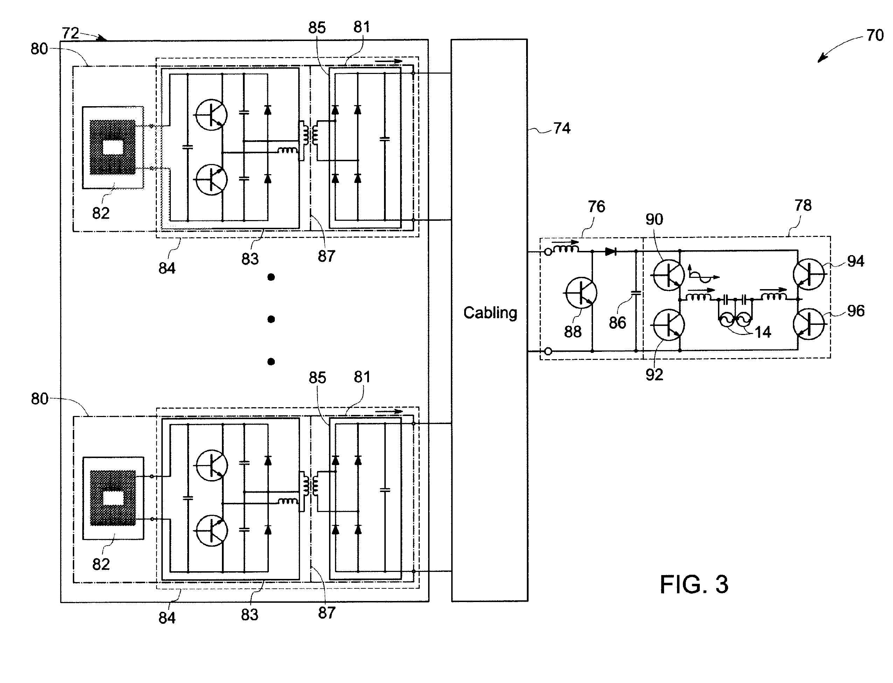

FIG. 3 illustrates a solar power generation system 70 in accordance with an embodiment of the present invention wherein the system includes a solar array or PV string 72, a connection unit or a cabling box 74, a boost converter 76, and a single phase inverter 78. If desired, a three-phase inverter may be used. The solar array 72 includes multiple first weatherable units 80 each including a photovoltaic (PV) module 82, a primary stage 83 of an isolated power converter 84 (shown as a DC to DC converter), and a primary side of a transformer 87. The solar array 72 further includes multiple second units 81 each including a secondary stage 85 of the isolated power converter 84 and a secondary side of transformer 87. The primary stage 83 and the secondary stage 85 of the isolated power converter 84 are physically separated by a transformer 87. Thus, the isolated power converter 84 ensures that the respective PV module or PV String 82 is not directly connected to the load or to the grid. The cabling box the connection unit 74 is utilized to connect the outputs of the units either in series to generate higher voltage or in parallel to generate higher current or a combination of series and parallel connections to balance voltage and current requirements.

The boost circuit 76 along with a maximum power point tracking (MPPT) controller (not shown) is used to determine the maximum power point for the voltage-current (V-I) characteristics of the array and to operate the array close to that point at all times. The boost converter 76 raises the voltage of the PV array 72 and in turn provides a controlled boosted voltage at the DC link 86 to acquire maximum power from the PV array, PV String and the cell. Example techniques include perturbation and observation methods and incremental conduction methods. In one embodiment where the transformer 87 is a step up transformer, the boost converter 76 may be eliminated as the step up transformer may be used to raise the voltage of the PV array. In another embodiment, the boost converter and the MPPT controller are located close to the inverter 78.

In the embodiment of FIG. 3, the inverter 78 converts the DC voltage from the boost converter 76 to a single phase AC voltage and provides power to the load. In another embodiment, the single-phase inverter 78 may be replaced by a three-phase inverter to supply power to the power grid. The inverter 78 and the boost converter 76 employ switching devices 88, 90, 92, 94, 96 that may be switched at a high switching frequency. In one embodiment, the switching devices comprise insulated gate bipolar transistors (IGBTs) or power metal oxide semiconductor field effect transistors (MOSFETs) or any other state-of-the-art switching devices. The switching devices are typically turned on and turned off by a gate drive circuit and in one embodiment comprise silicon carbide devices.

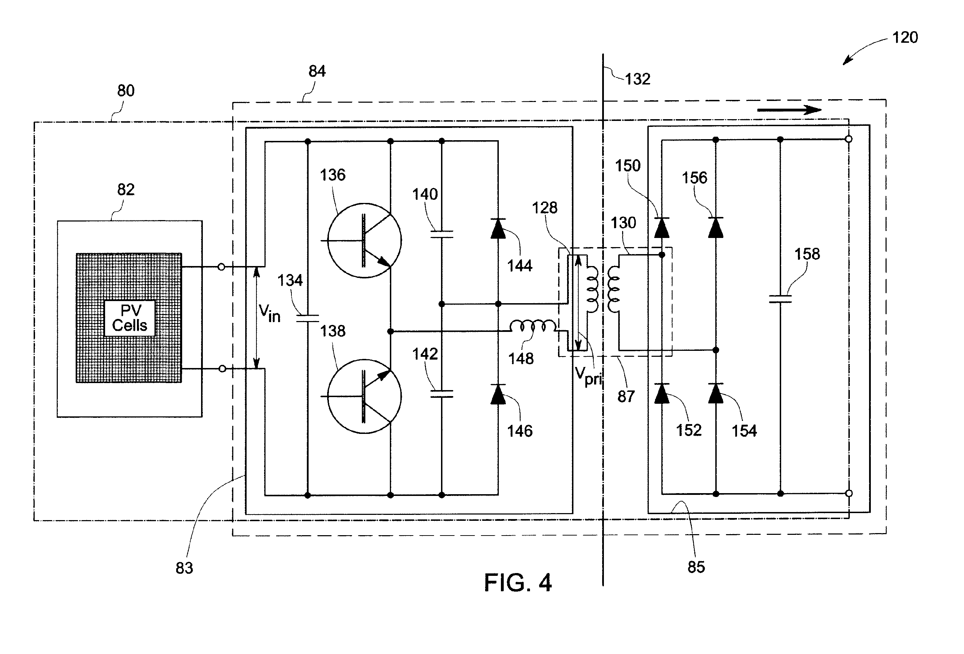

FIG. 4 shows a schematic 120 of individual first and second units 80, 81 including a PV module and an isolated power converter in accordance with one example of the embodiment of FIG. 3. In the embodiment of FIG. 4, the isolated power converter 84 comprises a partial series resonant converter including a primary stage 83 and a secondary stage 85. In another embodiment, the isolated power converter may comprise a flyback converter or a forward converter or any other resonant converter such as parallel resonant converter, which can meet these technical requirements. The two stages 83 and 85 are separated by a high frequency transformer 87 including a primary winding 128, a secondary winding 130, and a magnetic core 132. In one embodiment, the magnetic core comprises a ferrite material. In another embodiment, the high frequency transformer may have a rated frequency in a frequency range from 2 kHz to several hundred kHz. The primary stage 83 of the partial series resonant converter in one embodiment includes a DC link capacitor 134, switching devices 136 and 138, resonant capacitors 140 and 142, clamping diodes 144 and 146, and a resonant inductor 148. In one embodiment, the resonant inductor 148 may be formed by an inbuilt leakage inductance of the transformer. The secondary stage 85 of the partial series resonant converter includes a diode bridge network including diodes 150, 152, 154, 156 and an output capacitor 158. In another embodiment, the diode bridge network may be replaced by a synchronous rectifier. The clamping diodes 144 and 146 clamp the voltage $V_1$ to limit the peak capacitor device voltage to $V_{in}$.

In one embodiment, the partial series resonant converter may be operated in a zero current switching (ZCS) mode of operation. The ZCS operation of the converter is obtained when the switching frequency $f_s$ of the switching devices is lower than the resonant frequency $f_r$ given by following equation:

$$f_r = \sqrt{\frac{1}{L_r(C_1 + C_2)}} \qquad (1)$$

where, $L_r$ is the resonant inductor 148 and $C_1$ and $C_2$ are resonant capacitors 140 and 142 of FIG. 4. In one embodiment, the partial series resonant converter may also be operated in a zero voltage switching (ZVS) mode of operation. The ZVS operation of the converter is obtained when the switching frequency $f_s$ of the switching devices is higher than the resonant frequency $f_r$.

In ZCS operation, the device 136 is turned ON first, which results in a flow of a resonant current $i_r$ through the DC link capacitor 134, the device 136, resonant inductor 148, the transformer 87, and the resonant capacitor 142. A part of the resonant current also flows through the capacitor 140, as the resonance is between inductor 148 and both capacitors 140 and 142. The resonant current causes capacitor 142 to charge to a voltage $V_{in}$. If the resonant current tries to charge the capacitor to a voltage higher than $V_{in}$, the clamping diode 144 starts conducting. Thus, the diode 144 clamps the capacitor voltage $V_1$ to $V_{in}$, and the resonant current $i_r$ becomes zero linearly as the resonant current then flows through the inductor 148, the device 136, the diode 144, and the transformer 87.

Once the capacitor voltage $V_1$ is clamped to $V_{in}$ and the resonant current $i_r$ becomes zero, no current flows in any part of the circuit and the device 136 can be turned OFF at any stage. Thus, ZCS turn OFF of the device 136 is achieved. If the device 138 is then turned ON, capacitor voltage $V_1 = V_{in}$ will appear across the transformer 87 and the resonant inductor 148. There will again be a resonance between the capacitors 140, 142 and the inductor 148, and the resonant current will start flowing through capacitor 142, inductor 148, and the transformer 87, and also a part of the resonant current will flow through the capacitor 140. The resonant current causes the capacitor 142 to discharge. Once the capacitor 142 is completely discharged and the voltage $V_1$ becomes zero, the diode 146 starts conducting and the resonant current flows through the transformer 87, the inductor 148, the diode 146, and the device 138. Thus, the voltage of the capacitor 140 is now clamped to $V_{in}$ and

the resonant current becomes zero linearly. The device 138 is then turned OFF after the resonant current becomes zero to achieve ZCS operation.

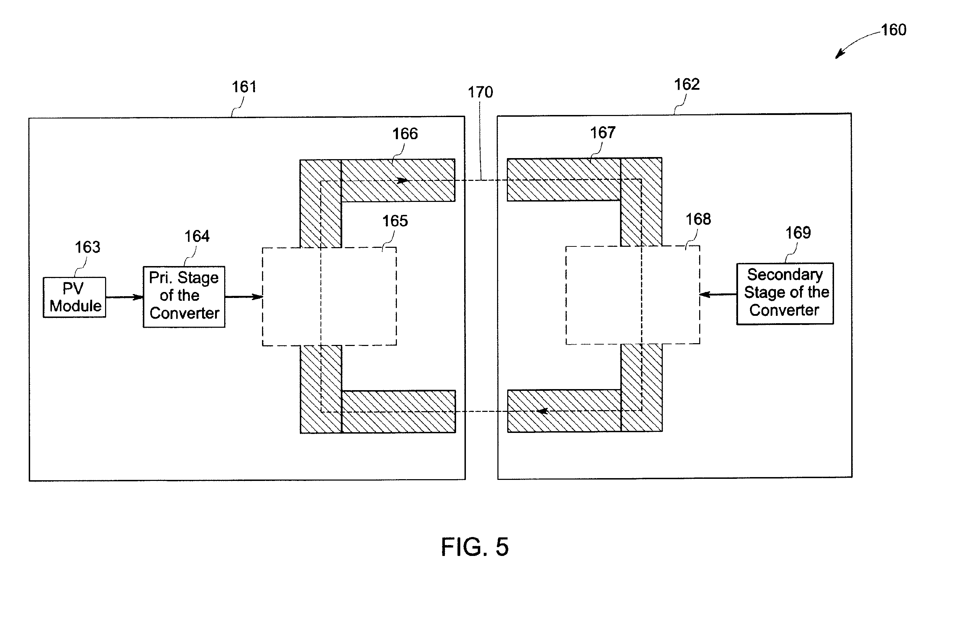

FIG. 5 illustrates a detailed schematic 160 of a magnetic coupling between first and second units in accordance with an embodiment of the present invention. The embodiment of FIG. 5 includes a first weatherable unit 161 and a second unit 162 which, depending upon whether its location will be exposed to the elements, may or may not need to be weatherable. The first unit 161 comprises a PV module 163, primary stage 164 of the isolated converter, primary winding 165 of the high frequency transformer and a first half of a split magnetic core 166. The second unit 162 includes a second half of the split magnetic core 167, secondary winding 168 of the high frequency transformer and the secondary stage of the converter 169. The primary winding is wound on the first half of the split core and similarly the secondary winding is wound on the second half of the split core. A magnetic flux 170 links the primary and secondary windings of the transformer and thus the energy is transferred via magnetic coupling from the primary winding 164 to the secondary winding 167. The casing of first and the second units may be made up of any material such as a plastic. In one embodiment, the gap between the first and the second unit is kept significantly low, such as few millimeters or few centimeters. In another embodiment, when the casing of the first and the second units is plastic, the two units may be attached to each other without any gap therebetween. In yet another embodiment, the first and the second units may be attached on opposing sides of a roof tile or racking assembly.

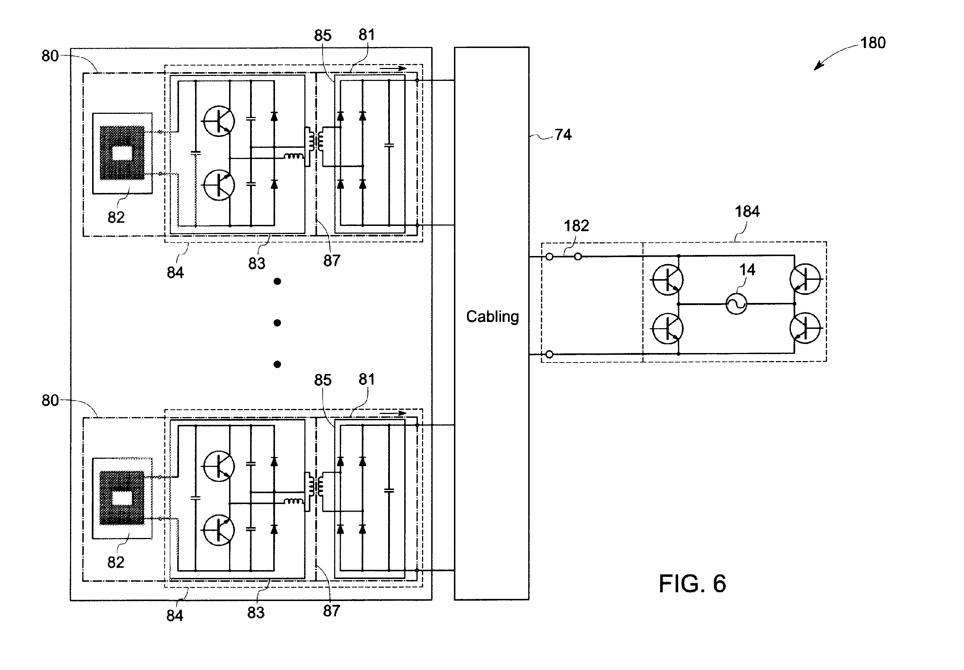

FIG. 6 illustrates a solar power generation system 180 including a pulsed bus in accordance with an embodiment of the present invention. The system 180 includes a pulsating bus 182 that is defined by a nonzero average value voltage that is proportional to a rectified utility grid AC supply. The pulsating bus 182 is derived by rectification of a main utility grid supply voltage via a PV inverter 184 that is connected to the main utility grid. In one embodiment of FIG. 6, the MPPT function may be performed on the primary side 83 of the converter 84.

The system 180 is particularly advantageous when the photovoltaic cells are arranged using high voltage PV modules 82 capable of delivering a PV voltage that is always larger in magnitude than the peak mains grid voltage. Each PV module 82 is configured to operate with the corresponding isolated power converter 84 that converts the PV module 82 voltage into a pulsing current that is injected into the pulsating bus 182. Although similar to an AC module, PV module 82 together with its corresponding isolated power converter 84 does not generate AC or DC, but instead generates a quasi AC, which observes a waveform formed by a positive semi-cycle of a sinusoidal AC signal e.g. typically switched with electronic converters.

According to one aspect of the invention, a boosting circuit is not required for the high voltage module 82 case since the working maximum power voltage will always be above the peak of the grid voltage when the photovoltaic cells are arranged into high voltage PV modules capable of delivering a PV voltage that is always larger in magnitude than the peak mains grid voltage.

System 70 of FIG. 3 and system 180 of FIG. 6 are expected to generate additional cost savings during installation since a specialized electrician is no longer required for installation as grounding connections may not be required for the PV module; and a DC disconnect is may also no longer be required since the DC source is contained inside the unit and is not externally exposed.

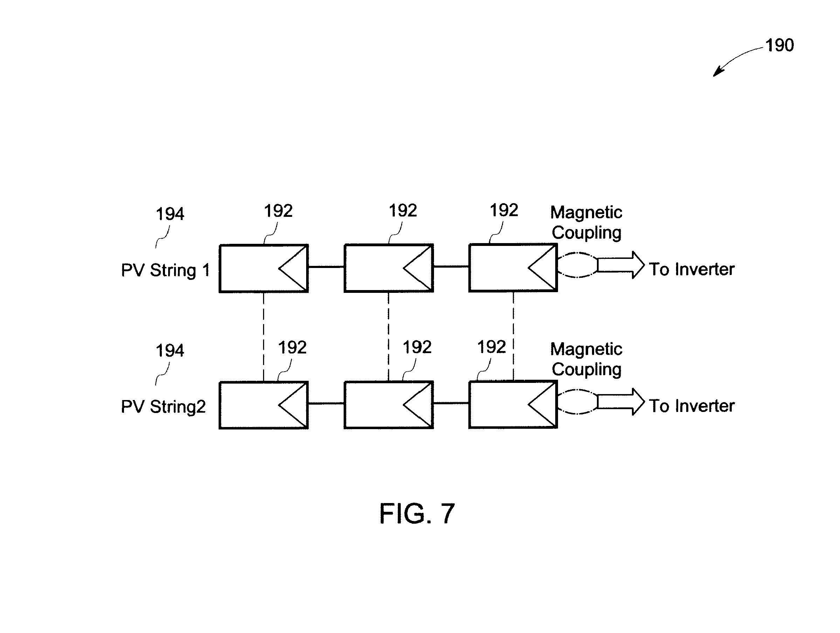

FIG. 7 illustrates another example of a solar power generation system 190 in accordance with an embodiment of the present invention. In the system 190, the series and parallel connections between various PV modules 192 are performed first, and then the combination is magnetically coupled to the inverter. In one embodiment, the magnetic coupling arrangement may comprise an isolated DC to DC converter in the manner described above with respect to FIG. 3. Thus, in this embodiment only one isolated DC to DC converter of higher rating is needed for one PV string 194. The above described MPPT functions may be performed either at a system level, on individual PV modules within a system, or on individual PV strings within a system.

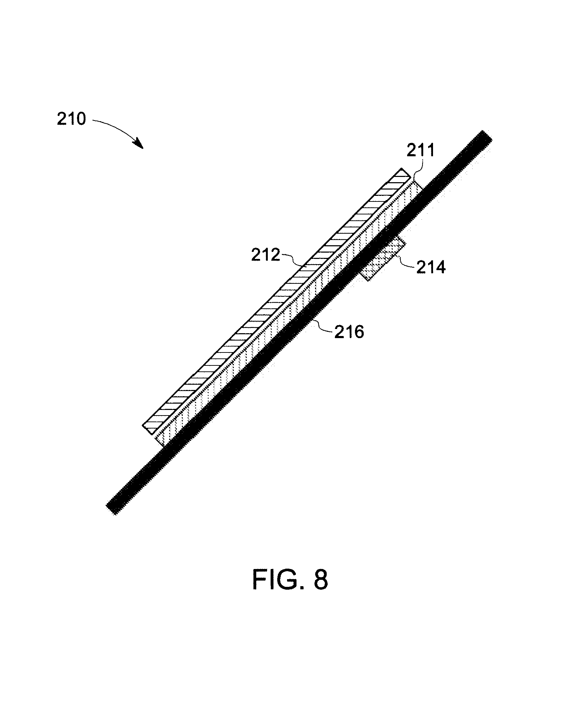

FIG. 8 shows a roof system 210 in accordance with an embodiment of the present invention. In the system 210, the PV module, the isolated DC to DC converter are integrated into two packaging modules or weatherable units 211, 212, thus reducing the cabling or wiring between the PV module and the converter and from the converter to the rest of the electrical system. In one embodiment, the receptacle pod or cabling box 214 of one or more Packaging modules 211 is mounted under the packaging modules or in close proximity thereto. In one embodiment, the packaging module may be factory sealed and designed to deliver AC, Quasi-AC (Rectified AC or similar) or DC voltage as described above. In another embodiment, the receptacle pod 214 may also be integrated into a mounting frame or a weatherable unit of the packaging module. Thus, further reducing cabling of the PV system 210. In a specific embodiment, the connection can be established through the roof 216 of the structure thereby eliminating the need for any wiring on the roof or external to the building structure and can further eliminate the need for grounding of the PV modules.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are defined by the following numbered clauses:

1. A power generation system comprising:

a plurality of isolated power converters, each comprising a primary stage, a secondary stage and a transformer providing an electrically contactless connection between the primary and secondary stages;

a plurality of first weatherable units, each comprising a photovoltaic (PV) module coupled to the primary stage of a respective one of the plurality of isolated power converters and a primary side of the transformer;

a plurality of second units, each comprising a second side of the transformer coupled to the secondary stage of a respective one of the plurality of isolated power converters;

a direct current (DC) to alternating current (AC) inverter configured to transfer power from the photovoltaic module to a power grid; and

a connection unit for coupling the secondary stages of the isolated power converters and the DC to AC inverter.

2. The system of clause 1, wherein the isolated power converters comprise resonant converters.

3. The system of any preceding clause, wherein a resonant inductor is formed in each respective isolated power converter by a leakage inductance of the respective transformer.

4. The system of any preceding clause, wherein the transformer comprises a high frequency transformer.

5. The system of any preceding clause, wherein the transformer comprises a step up transformer.

6. The system of any preceding clause, wherein the first side of the transformer comprises a first half of a magnetic core and a primary winding.

7. The system of any preceding clause, wherein the second side of the transformer comprises a second half of the magnetic core and a secondary winding.

8. The system of any preceding clause, wherein the first weatherable unit and the second unit comprise a plastic casing.

9. The system of any preceding clause, wherein the secondary stage comprises a diode bridge network or a synchronous rectifier.

10. The system of any preceding clause, wherein the resonant converter is configured to operate in a zero current switching (ZCS) mode or in zero voltage switching (ZVS) mode.

11. The system of any preceding clause, wherein the second unit is attached to a roof tile.

12. The system of any preceding clause, wherein a boost converter is connected between the connection unit and the DC to AC inverter.

13. The system of any preceding clause, wherein a pulsating bus is coupled between the connection unit and the DC to AC inverter.

14. The system of any preceding clause, wherein the connection unit is coupled to a roof.

15. The system of any preceding clause, wherein the first weatherable unit, the connection unit and the second unit are above the roof.

16. The system of any preceding clause, wherein the connection unit is mounted inside the second unit.

17. A power generation system comprising:

a plurality of photovoltaic modules;

an isolated power converter comprising a primary stage, a secondary stage and a transformer providing a magnetic coupling between the primary and secondary stages;

a connection unit for coupling outputs of the plurality of photovoltaic modules and the isolated power converter; and

a direct current (DC) to alternating current (AC) inverter configured to transfer power from the photovoltaic modules to a power grid.

18. A power generation system comprising:

a plurality of partial series resonant converters, each comprising a primary stage, a secondary stage and a transformer providing an electrically contactless connection between the primary and secondary stages;

a plurality of first weatherable units each comprising a photovoltaic (PV) module coupled to the primary stage of a respective one of the plurality partial series resonant converters and a primary side of the transformer;

a plurality of second units, each comprising a second side of the transformer coupled to the secondary stage of a respective one of the plurality of partial series resonant converters;

a direct current (DC) to alternating current (AC) inverter configured to transfer power from the photovoltaic modules to a power grid ; and

a connection unit for coupling the secondary stages of the partial series resonant converters and the DC to AC inverter.

## Claims

1. A power generation system (70) comprising:

a plurality of isolated power converters (84), each comprising a primary stage (83), a secondary stage (85) and a transformer (87) providing an electrically contactless connection between the primary (83) and secondary stages (85);
a plurality of first weatherable units (80), each comprising a photovoltaic (PV) module (82) coupled to the primary stage (83) of a respective one of the plurality of isolated power converters (84) and a primary side of the transformer (87);
a plurality of second units (81), each comprising a second side of the transformer (87) coupled to the secondary stage (85) of a respective one of the plurality of isolated power converters (84);
a direct current (DC) to alternating current (AC) inverter (78) configured to transfer power from the photovoltaic module (82) to a power grid (14); and
a connection unit (74) for coupling the secondary stages (85) of the isolated power converters (84) and the DC to AC inverter (78).

2. The system (70) of claim 1, wherein the isolated power converters (84) comprise resonant converters.

3. The system (70) of any preceding claim, wherein a resonant inductor is formed in each respective isolated power converter (84) by a leakage inductance of the respective transformer (87).

4. The system (70) of any preceding claim, wherein the transformer (87) comprises a high frequency transformer.

5. The system (70) of any preceding claim, wherein the transformer (87) comprises a step up transformer.

6. The system (70) of any preceding claim, wherein the resonant converter is configured to operate in a zero current switching (ZCS) mode or in zero voltage switching (ZVS) mode.

7.  The system (70) of any preceding claim, wherein a boost converter (76) is connected between the connection unit (74) and the DC to AC inverter (78).

8.  The system (70) of any preceding claim, wherein a pulsating bus (182) is coupled between the connection unit (74) and the DC to AC inverter (78).

9.  A power generation system (190) comprising:

    a plurality of photovoltaic modules (192);
    an isolated power converter (84) comprising a primary stage (83), a secondary stage (85) and a transformer (87) providing a magnetic coupling between the primary (83) and secondary stages (85);
    a connection unit (74) for coupling outputs of the plurality of photovoltaic modules (192) and the isolated power converter (84); and
    a direct current (DC) to alternating current (AC) inverter (78) configured to transfer power from the photovoltaic modules (192) to a power grid (14).

10.  A power generation system (70) comprising:

    a plurality of partial series resonant converters (84), each comprising a primary stage (83), a secondary stage (85) and a transformer (87) providing an electrically contactless connection between the primary (83) and secondary stages (85);
    a plurality of first weatherable units (80) each comprising a photovoltaic (PV) module (82) coupled to the primary stage (83) of a respective one of the plurality partial series resonant converters (84) and a primary side of the transformer (87);
    a plurality of second units (81), each comprising a second side of the transformer (87) coupled to the secondary stage (85) of a respective one of the plurality of partial series resonant converters (84);
    a direct current (DC) to alternating current (AC) inverter (78) configured to transfer power from the photovoltaic modules (82) to a power grid (14); and
    a connection unit (74) for coupling the secondary stages (85) of the partial series resonant converters (84) and the DC to AC inverter (78).

FIG. 1

EP 2 256 894 A2

FIG. 2

FIG. 3

EP 2 256 894 A2

FIG. 4

FIG. 5

FIG. 6

EP 2 256 894 A2

EP 2 256 894 A2

190

194     192         192         192    Magnetic
                                      Coupling

PV String 1                                      To Inverter

194     192         192         192    Magnetic
                                      Coupling

PV String2                                      To Inverter

FIG. 7

210

211

212

214

216

FIG. 8